# EUROPEAN PATENT APPLICATION

(11) **EP 1 310 644 A1**
(43) Date of publication of application: **14.05.2003**
(21) Application number: 01976949.6
(22) Date of filing: 15.08.2001
(51) Int. Cl.: F02C 1/02, F25B 11/02

(54) **METHOD FOR RECOVERING THE ENERGY OF GAS EXPANSION AND A RECOVERY DEVICE FOR CARRYING OUT SAID METHOD**

(30) Priority: 16.08.2000 RU 2000121361
(71) Applicant: Tuzova, Alla Pavlovna, St. Petersburg, 196244 (RU)
(72) Inventor: VASILJEV, Vladimir Yaroslavovich, St.Petersburg, 196240 (RU); KISELEV, Oleg Mikhailovich, Essen, 45327 (DE)
(74) Representative: Walter, Wolf-Jürgen
(86) International application number: PCT/RU01/00351
(87) International publication number: WO 02/014662

(57) **Zusammenfassung**

Das Verfahren und die entsprechende Anlage sind für die Anwendung in Erdgasdruck-Abbausystemen vorgesehen. Dabei handelt es sich, um einen Abbau von Überdruck, zum Beispiel Bohrloch-oder Leitungsdruck, bis hin zu dem Druck, der vom Abnehmer verlangt wird. Das Wesen des Verfahrens besteht darin, daß in das bekannte Verfahren der Gasentspannungsenergienutzung, welches sich dadurch auszeichnet, daß die Reduzierung des Gasüberdrucks, zum Beispiel Bohrloch- oder Leitungsdruck bis hin zum notwendigen Druck, mittels einer Umwandlung von Gasentspannungsenergie in mechanische Energie geschieht, wobei das während der Gasdruckreduzierung abgekühlte Gas als Kältemittel genutzt wird, eine Neuheit eingeführt wird. Die Neuheit besteht in einer mehrmaligen Gasdruckreduzierung sowie einer mehrmaligen Abzapfung der erzeugten Kälte. Das Wesen der neuen Anlage besteht darin, daß die Energienutzungsanlage, deren Eingang mit einem Bohrloch oder einer Überdruckgasleitung (3), und deren Ausgang mit einer Unterdruckgasleitung oder einem Gasabnehmer (7,9) verbunden ist, eine Expasionsmaschine (zum Beispiel, eine Entspannungsturbine) aufweist, welche aus zwei oder mehr Teilen (1,2) besteht, die entsprechend dem Gasdruckreduzierungslauf positioniert sind. Außerdem besteht die Expansionsmaschine aus einem mit ihr kinematisch verbundenen Konverter (4) mechanischer Energie, zum Beispiel, einem elektrischen Energieerzeuger, und aus zwei oder mehr Wärmetauschern (6, 8).

## Description

### Anwendungsgebiet der Erfindung

Das vorliegende Verfahren und die entsprechende Anlage sind für die Anwendung in Erdgasdruck-Abbausystemen vorgesehen. Dabei handelt es sich, um einen Abbau von Überdruck, zum Beispiel Bohrloch-oder Leitungsdruck bis hin zu dem Druck, der vom Abnehmer verlangt wird.

### Bekannter Stand der Technik

Es sind Verfahren bekannt, die den Erdgasdruck, welcher aus einem Bohrloch oder einer Leitung kommt, mittels Abdrosselung abbauen. Es sind auch Anlagen bekannt, welche für die Ausführung eines solchen Verfahrens genutzt werden [Druckverminderer, Ventile, Hähne usw.). (Polytechnisches Wörterbuch, Verlag "Sowjetisches Lexikon", 1977, Seite 153, 420].

Diese Verfahren und die Anlagen, die für deren Ausführung vorgesehen sind, nutzen die Gasentspannungsenergie, und die sich dabei bildende Kälte nicht aus. Dabei sind zur Vermeidung von Verschmutzungen der Druckverminderer durch Eis, welches sich während deren Funktion bildet, komplizierte Anlagen sowie ein zusätzlicher Energieaufwand notwendig.

Es ist ein Verfahren zur Nutzung von Erdgasentspannungsenergie bekannt, in welchem es sich um einen Abbau von Bohrloch- oder Leitungsdruck bis hin zum notwendigen, mittels einer Konvertierung der Erdgasentspannungsenergie in mechanische Energie handelt. [RU 2117173, IPK6 F02C 1/02, 1996]. Das genannte Verfahren wird in einer Energieausnutzungsanlage ausgeführt, deren Eingang mit einem Bohrlochausgang oder einer Überdruckgasleitung verbunden ist. Der Ausgang dieser Anlage wird dabei mit einer Unterdruckgasleitung oder unmittelbar mit dem Gasabnehmer verbunden.

Diese Nutzungsanlage enthält eine Expansionsmaschine, zum Beispiel eine Entspannungsturbine, sowie einen mit der Expansionsmaschine kinematisch verbundenen Konverter mechanischer Energie, zum Beispiel einen elektrischen Energieerzeuger. Dieses Verfahren sowie dessen Ausführung machen es möglich, die Gasentspannungsenergie während der Gasdruckreduzierung auszunutzen.

Allerdings, bieten dieses Verfahren und dessen Ausführung nicht die Möglichkeit, die Kälte, welche sich im Laufe der Gasentspannung bildet auszunutzen. Solch ein Verfahren und dessen Ausführung haben einen geringen Nutzeffekt.

Es ist ein Ausnutzungsverfahren bekannt, bei dessen Ausführung die Gasentspannungsenergie dadurch genutzt wird, dass der Gasüberdruck bis hin zum erforderlichen, mittels der Konvertierung von Gasentspannungsenergie in mechanische Energie genutzt wird. Gleichzeitig wird das beim Druckabbau abgekühlte Gas als Kältemittel für die Erzeugung von Kälte genutzt. [SU, A1, 844797].

Allerdings, sieht dieses Verfahren eine Gasdruckreduzierung im Laufe einer einzigen Phase vor, und besitzt deswegen einen unzureichenden Gesamtnutzeffekt.

Es ist eine Energieausnutzungsanlage bekannt, welche für die Ausnutzung von Gasentspannungsenergie und der sich dabei bildenden Kälte vorgesehen ist. [RU 2013616, F02C 6/00,1994). Allerdings, verfügt diese Anlage über einen niedrigen Nutzeffekt, da die Reduzierung des Gasdrucks und die Nutzung der Kälte dort im Laufe einer einzigen Phase geschieht.

### Erörterung der Erfindung.

Der vorliegenden Erfindung, liegt die Aufgabe zugrunde, die Ausnutzung der sich bei der Erdgasdruckreduzierung bildenden Kälte zu erhöhen, grössere Mengen von Energie und Kälte zu erzeugen, und den totalen Nutzeffekt des Verfahrens, sowie der Anlage, welche für die Ausnutzung von Gasentspannungsenergie vorgesehen ist, zu erhöhen.

Die gestellte Aufgabe, wird anhand der vorliegenden Ausführung dadurch gelöst, dass in die bekannte Ausführung der Erdgasenergienutzung, bei der die Reduzierung des Gasdrucks vom Überdruck, zum Beispiel Leitungsdruck, bis hin zum notwendigen Druck mittels einer Konvertierung (Umwandlung) der Gasentspannungsenergie in mechanische Energie ausgeführt wird, wobei das bei der Gasdruckreduzierung abgekühlte Gas als Kältemittel genutzt wird, eine Neuheit eingeführt wird. Die Neuheit besteht in der Erdgasdruckreduzierung im Laufe von zwei oder mehr aufeinanderfolgenden Phasen und der gleichzeitigen Ausnutzung von mindestens einem Teil des Gases nach der ersten und/oder entsprechenden folgenden Erdgasdruckreduzierungsphase als Kältemittel für die Erzeugung und Nutzung von Kälte. Dabei wird der andere Erdgasteil nach der ersten und/oder entsprechenden folgenden Erdgasdruckreduzierungsphase oder das ganze als Kältemittel genutzte Gas für die nächste Phase der konvertierung von Gasentspanungsenergie in mechanische Energie genutzt.

Dank der phasenweisen Erdgasdruckreduzierung und der Nutzung des ganzen Gases oder dessen Teils nach der ersten und/oder entsprechenden folgenden Erdgasdruckreduzierungsphase als Kältemittel, wird der totale Nutzeffekt der Ausführung erhöht.

Die gestellte Aufgabe wird in der erfindungsgemäßen Vorrichtung dadurch gelöst, dass die Gasentspannungsenergie-Nutzungsanlage, welche eine Expansionsmaschine, zum Beispiel, eine Entspannungsturbine aufweist, deren Eingang mit dem Bohrloch oder der Gasleitung, die Überdruckgas führt, und deren Ausgang mit der Unterdruckgasleitung verbunden ist, eine Expansionsmaschine, zum Beispiel, Entspannungsturbine, und einen mit der Expansionsmaschine kinematisch verbundenen Konverter, zum Beispiel, einen elektrischen Energieerzeuger aufweist. Die Anlage enthält mindestens einen Wärmetauscher, dessen Ausgangsrohranschluss mit dem Expansionsmaschinenausgang, zum Beispiel dem Ausgang einer Entspannungsturbine, verbunden ist.

Als Neuheit kann in der vorliegenden Anlage die Tatsache angesehen werden, dass die Expansionsmaschine der Energienutzungsanlage, zum Beispiel eine Entspannungsturbine, aus zwei oder mehr Teilen besteht, welche entsprechend dem Lauf der Gasdruckreduzierung nacheinander angeordnet sind. Die Anlage verfügt außerdem über zwei oder mehr Wärmetauscher-Kühlgeräte. Dabei ist der Eingangsrohranschluss von jedem Wärmetauscher-Kühlgerät der sich von Seiten des Kältemittels befindet, mit dem Ausgang des entsprechenden Teils der Expansionsmaschine verbunden, und die Anzahl der Wärmetauscher-Kühlgeräte übersteigt dabei nicht die Zahl von Teilen der Expansionsmaschine. Solch eine Verbesserung der Energienutzungsanlage macht es möglich, den Nutzeffekt der genannten Anlage zu erhöhen und die Menge der erzeugten Kälte zu vergrößern.

Der Ausgang des vorhergehenden Teils der Expansionsmaschine an der Anlage kann gleichzeitig sowohl mit dem nächsten Teil der Expansionsmaschine als auch mit dem Eingangsanschlussrohr an der Kältemittelseite des entsprechenden Wärmetauscher-Kühlgerätes verbunden werden. Dabei kann das Ausgangsanschlussrohr an der Kältemittelseite eines oder mehrerer Wärmetauscher-Kühlgeräte mit der Gasunterdruckleitung oder mit dem Gasabnehmer verbunden werden. Dabei spaltet sich der Strom des Arbeitsmediums auf, und ein Teil davon wird für die Kältenutzung abgezogen. Das verbessert den Wärmekreislauf der Anlage.

Diese Verbesserung erhöht den Nutzeffekt der Anlage. Gleichzeitig ergibt sich die Möglichkeit zur optimalen Regelung der Funktion der Expansionsmaschine während einer Betriebsartänderung.

Der Ausgang des vorhergehenden Teils der Expansionsmaschine der Anlage kann nur mit dem Eingangsanschlussrohr von der Seite des Kältemittels eines oder jedes Wärmetauscher-Kühlgerätes, der sich zwischen zwei Teilen der Expansionsmaschine befindet, verbunden werden. Dabei kann das Ausgangsanschlussrohr von Seiten des Kältemittels des gleichen Wärmetauscher-Kühlgerätes, welcher sich zwischen zwei Teilen der Expansionsmaschine befindet, mit dem Arbeitsmediumeingang des nächsten Teils der Expansionsmaschine verbunden werden. In diesem Falle kommt es in einem oder jedem Wärmetauscher-Kühlgerät zur zusätzlichen Erwärmung des Arbeitsmediums (Gases). Dies verbessert den Wärmekreislauf der Anlage.

Diese Verbesserung erhöht zusätzlich den Nutzeffekt der Anlage. Das geschieht dank der Ausnutzung der Kühlmittelwärme, welche aufgrund des Wärmeaustausches im Wärmetauscher-Kühlgerät entsteht. Gleichzeitig entsteht die Möglichkeit zur optimalen Regelung der Expansionsmaschine während einer Betriebsartänderung. Die Regelungsmöglichkeit ergibt sich dank der Mengen und/oder Temperaturänderung des in den Wärmetauscher-Kühlgeräten erwärmten Arbeitsmediums oder Medien, welche gasförmig oder flüssig sind.

### Kurze Beschreibung der Zeichnungen

Fig.1 stellt ein Diagramm einer Energienutzungsanlage dar, zu der eine Entspannungsturbine gehört, welche über einen Überdruckteil, einen Unterdruckteil, zwei Wärmetauscher-Kühlgeräte und einen elektrischen Energieerzeuger verfügt.
Fig. 2 stellt ein Diagramm einer Energienutzungsanlage dar, zu der eine Entspannungsturbine gehört, welche über einen Überdruckteil, einen Mitteldruckteil, einen Unterdruckteil, drei Wärmetauscher-Kühlgeräte und einen elektrischen Energieerzeuger verfügt.
Fig.3 stellt ein Diagramm einer Energienutzungsanlage, welche über eine überdruckentspannungsturbine, eine Mitteldruckentspannungsturbine, eine Unterdrucksentspannungsturbine, drei Wärmetauscher-Kühlgeräte, und drei elektrische Energieerzeuger verfügt.

Das erfindungsgemäße Verfahren sowie die entsprechende Anlage werden anhand der Beschreibung der Möglichkeiten ihrer optimalen Ausführung erklärt. Dabei werden die Möglichkeiten der Gasentspannungsenergienutzung mit den Anlagenfunktionen in den Beispielen erläutert.

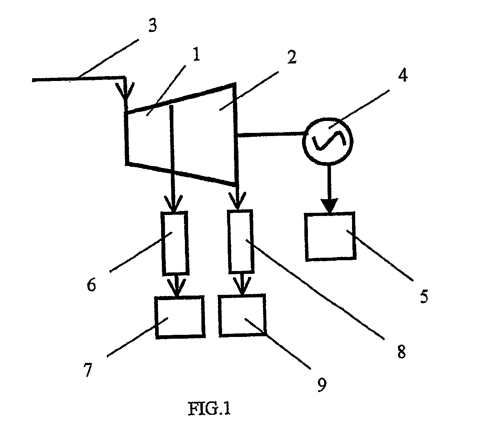

### Beispiel 1 (Fig.1)

Die Energienutzungsanlage besitzt eine Entspannungsturbine, welche aus achsrecht gelegenen Teilen besteht. Dabei handelt es sich um den Überdruckteil 1 und den Unterdruckteil 2. Der Eingang des Uberdruckteils 1 ist mit der Gasleitung 3 verbunden, durch welche Gas mit Überdruck fliesst. Diese Leitung 3, kann eine Überdruck- oder Mitteldruck-Erdgasleitung, eine Ventilsteuerungstationsleitung, eine Thermalkraftwerkleitung, eine Heizhausleitung, eine Bohrungsleitung am Erdgasförderort usw. darstellen (die genannten Objekte sind auf den Zeichnungen nicht dargestellt).

Mit der einheitlichen Welle des Überdruckteils 1 und des Unterdruckteils 2 ist kinematisch oder unmittelbar die Welle eines elektrischen Energieerzeugers 4 verbunden, welcher dem Abnehmer elektrischer Energie 5 (Strom) zuführt. Der Ausgang des Überdruckteils 1, ist sowohl mit dem Eingang des Unterdruckteils als auch mit dem Eingangsanschlussrohr von der Seite des Kältemittels des Wärmetauscher-Kühlgerätes 6 verbunden. Das Ausgangsanschlussrohr von Seiten des Kältemittels des Wärmetauscher-Kühlgerätes 6 ist mit der Unterdrucksgasleitung verbunden, über welche das Gas dem Abnehmer 7 zugeleitet wird.

An der Gasausgangsstelle aus dem Unterdrucksteil 2 der Entspannungsturbine befindet sich ein Wärmetauscher-Kühlgerät 8, dessen Eingangsanschlussrohr von der Seite des Kältemittels mit der Gasaustrittstelle des Unterdruckteils 2 der Entspannungsturbine verbunden ist. Dabei ist das Ausgangsanschlussrohr von Seiten des Kältemittels des Wärmetauscher-Kühlgerätes 8 mit der mit der Unterdrucksgasleitung verbunden, welche das Gas dem Gasabnehmer 9 zuführt.

Die Energienutzungsanlage funktioniert auf folgende Weise. Das Erdgas aus der Überdruckleitung 3 strömt in den Überdruckteil 1 ein und dreht den Teil, in dem es sich entspannt und abkühlt. Ein Teil dieses Erdgases strömt in den Unterdruckteil 2 ein, und der andere Teil des Gases strömt in das Eingangsanschlussrohr, welches sich an der Seite des Kältemittels des Wärmetauscher-Kühlgerätes 6 befindet. Das teilweise abgekühlte und teilweise druckreduzierte Gas durchströmt das Wärmetauscher-Kühlgerät 6. Danach wird das Gas mit notwendigem Druck dem Gasabnehmer 7 zugeführt.

Der andere Teil des Gases, welches in den Unterdruckteil 2 der Entspannungsturbine einströmt, leistet eine zusätzliche Arbeit, reduziert den Druck und kühlt sich ab. Aus dem Unterdruckteil 2 strömt dieses Gas in das zweite Wärmetauscher-Kühlgerät 8 ein, wo es aufgewärmt wird und wo dem Gas die Kälte entzogen wird. Danach wird das Unterdruckerdgas dem Gasabnehmer 9 zugeführt.

Die Entspannungsturbine, welche den Überdruckteil 1 und den Unterdruckteil 2 einschliesst, dreht den elektrischen Energieerzeuger 4. Der elektrische Strom wird dem Stromabnehmer 5 zugeführt.

Die Kälte kann für Gefrierkammern und Eisringe, sowie für die Gasverflüssigung von aus Bohrlöchern gefördertem Gas verwendet werden. Die Nutzarbeit, welche vom Gas im Laufe seiner Entspannung erfüllt wird, kann unter anderem für Gasverdichtung oder Elektrizitätversorgung eines einzelnen Erdgasbohrloches verwendet werden.

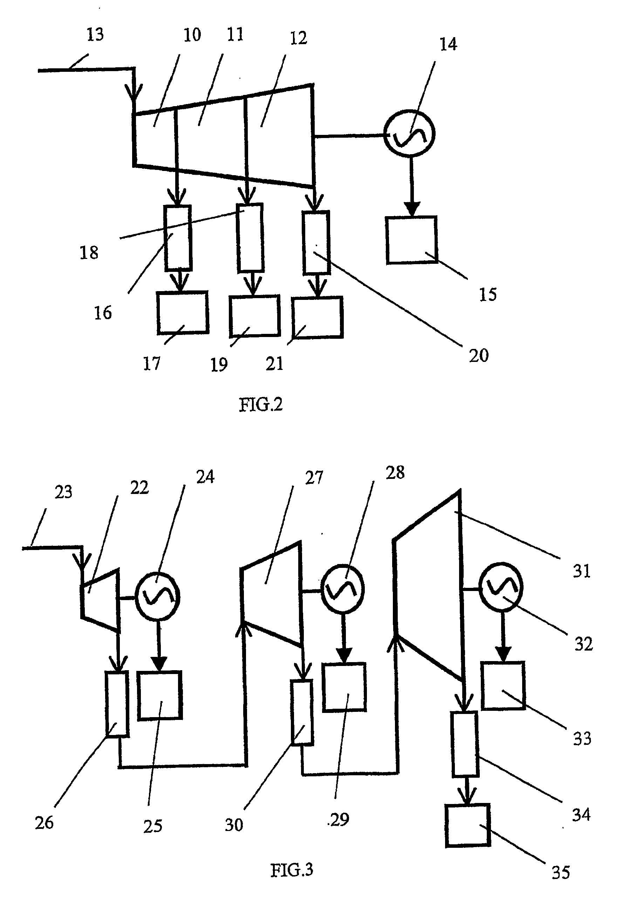

### Beispiel 2 (Fig 2)

Die Energienutzungsanlage besteht aus einer Entspannungsturbine, welche einen Überdruckteil 10, einen Mitteldruckteil 11 und einen Unterdruckteil 12, die auf einer Welle gelegen sind, einschließt.

Der Eingang des Überdruckteils 10 ist mit einer Überdruckgasleitung 13 verbunden. Der Ausgang des Überdruckteils 10 ist sowohl mit dem Eingang des Mitteldruckteils 11 als auch mit dem Eingangsanschlussrohr des Wärmetauscher-Kühlgerätes 16 von Seiten des Kältemittels verbunden. Der Gasaustritt aus dem Wärmetauscher-Kühlgerät 16 ist mit dem Unterdruckgasabnehmer 17 verbunden. Der Mitteldruckteilausgang 11 ist sowohl mit dem Eingang des Unterdruckteils als auch mit dem Eingangsanschlussrohr des Wärmetauscher-Kühlgerätes 18 verbunden. Der Gasaustritt aus dem Wärmetauscher-Kühlgerät 18 ist mit dem Unterdruckgasabnehmer 19 verbunden. Der Ausgang des Unterdruckteils 12 ist mit dem Einganganschlussrohr des Wämetauscher-Kühlgerätes 20 von Seiten des Kältemittels verbunden. Der Gasaustritt aus dem Wärmetauscher-Kühlgerät 20 ist mit dem Unterdruckgasabnehmer 21 verbunden.

Die Energienutzungsanlage funktioniert auf folgende Weise.

Das Erdgas aus der Überdruckgasleitung 13 strömt in den Überdruckteil 10 ein und dreht das Teil, in dem es sich entspannt und abkühlt. Ein Teil dieses Erdgases strömt in den Mitteldruckteil 11 ein und dreht den letzteren, in dem es sich entspannt und abkühlt. Dabei strömt der andere Teil des Gases zum Eingangsanschlussrohr des Wärmetauscher-Kühlgerätes 16, der sich auf der Seite des Kältemittels befindet, von wo das Erdgas dem Unterdruckgasabnehmer 17 zugeführt wird. Der Druck, welcher für den Gasabnehmer 17 notwendig ist, kann höher sein als der Druck der für die anderen Erdgasabnehmer 19 und 21 nötig ist. Der andere Teil des Gasstroms erfüllt eine Arbeit im Mitteldruckteil 11, reduziert den Druck zusätzlich, und kühlt sich ab. Daraufhin wird der Erdgasstrom aufgespalten. Der eine Teil dieses Stromes fliesst zum Eingangsanschlussrohr des Wärmetauscher-Kühlgerätes 18, welcher sich an Seiten des Kältemittels befindet, von wo das Erdgas dem Gasabnehmer 19 zugeführt wird. Der Reststrom des Erdgases fliesst zum Eingang des Unterdruckteils 12 und dreht den letzteren, in dem es sich entspannt und abkühlt. Danach fliesst das Erdgas in das Wärmetauscher- Kühlgerät 20, von wo es dem Unterdruckgasabnehmer 21 zugeführt wird. Die Entspannungsturbine dreht den elektrischen Energieerzeuger 14, welcher Strom für den Abnehmer elektrischer Energie 15 erzeugt.

Die Kälte kann für Gefrierkammern und Eisringe sowie für die Gasverdichtung von aus Bohrlöchern gefördertem Gas verwendet werden. Die Nutzarbeit, welche vom Gas im Laufe seiner Entspannung erfüllt wird, kann unter anderem, für die Gasverdichtung oder die Elektrizitätversorgung eines einzelnen Erdgasbohrloches verwendet werden.

### Beispiel 3 (Fig 3).

Die Energienutzungsanlage besteht aus einer Überdruckentspannungsturbine 22, deren Eingang mit einer Überdruckerdgasleitung 23 verbunden ist. Die Welle 22 ist kinematisch oder unmittelbar mit einem elektrischen Energieerzeuger 24, verbunden, welcher elektrisch mit einem Abnehmer elektrischer Energie 25 verbunden ist. Der Ausgang der Überdruckentspannungsturbine 22 ist mit dem Eingangsanschlussrohr des Wärmetauscher- Kühlgerätes 26 von Seiten des Kältemittels verbunden. Der Gasaustritt des Wärmetauscher-Kühlgerätes 26, ist mit dem Eingang einer Mitteldruckentspannungsturbine 27 verbunden. Die Welle der Mitteldruckentspannungsturbine 27 ist kinematisch oder unmittelbar mit dem elektrischen Energieerzeuger 28 verbunden, der sich elektrisch mit dem Abnehmer elektrischer Energie 29 verbindet. Der Ausgang der Mitteldruckentspannungsturbine 27 ist mit dem Einganganschlussrohr des Wärmetauscher-Kühlgerätes 30 verbunden, welches sich von Seiten des Kältemittels befindet. Der Gasaustritt des Wärmetauscher-Kühlgerätes 30, ist mit dem Eingang einer Unterdruckentspannungsturbine 31 verbunden. Die Welle der Unterdruckentspannungsturbine 31 ist kinematisch oder unmittelbar mit dem elektrischen Energieerzeuger 32 verbunden, welcher sich elektrisch mit dem Abnehmer elektrischer Energie 33 verbindet. Der Ausgang der Unterdruckentspannungsturbine ist mit dem Eingang des Wärmetauscher-Kühlgerätes 34 verbunden. Der Ausgang des Wärmetauscher-Kühlgerätes 34 ist mit dem Unterdruckerdgasabnehmer 35 verbunden.

Die Energienutzungsanlage funktioniert auf folgende Weise. Das Erdgas aus der Überdruckgasleitung 23 fließt in die Überdruckentspannungsturbine 22 ein und dreht die letztere, indem es sich entspannt und abkühlt. Aus der Überdruckentspannungsturbine 22 fließt das Gas in das Wärmetauscher-Kühlgerät 26, wo die Kälte genutzt und das Gas aufgewärmt und entspannt wird.

Weiterhin fließt das Gas in die Mitteldruckentspannungsturbine 27 und dreht die letztere, indem es sich entspannt und abkühlt. Danach fließt das Gas in das Wärmetauscher-Kühlgerät 30, in dem die Kälte ausgenutzt und das Gas erwärmt und entspannt wird. Aus dem Wärmetauscher-Kühlgerät 30 fließt das erwärmte und entspannte Gas in die Unterdruckentspannungsturbine 31, und dreht die letztere wobei es sich abkühlt und entspannt. Aus der Unterdruckentspannungsturbine 31 fließt das Gas in das Wärmetauscher-Kühlgerät 34, in dem die Kälte ausgenutzt, das Erdgas aber erwärmt und entspannt wird. Danach fließt das Gas zum Unterdruckgasabnehmer 35. Die Überdruckentspannungsturbine 22, die Mitteldruckentspannungsturbine 27, und die Unterdruckentspannungsturbine 31 drehen die entsprechenden elektrischen Energieerzeuger 24, 28 und 32, welche Strom an die entsprechenden Abnehmer der elektrischen Energie 25, 29 und 33 weiterleiten. Die elektrischen Energieerzeuger 24, 28 und 32 können an ein einheitliches Stromnetz angeschlossen werden.

Dank der phasenweisen Abkühlung des Gases in der Überdruckentspannungsturbine 22, der Mitteldruckentspannungsturbine 27 und der Unterdruckentspannungsturbine 31 und der phasenweisen Erwärmung in den Wärmetauscher-Kühlgeräten 26 und 30 findet eine Erhöhung des totalen Nutzeffekts der Energienutzungsanlage statt.

### Industrielle Anwendbarkeit

Die Erfindung kann zur Lösung einer vielzahl praktischer Aufgaben beitragen, welche mit der Erzeugung zusätzlicher Energie und billiger Kälte verknüpft sind. Die Erfindung kann beim Austritt von Überdruckerdgas unmittelbar aus Gasförderungsbohrlöchern sowie bei einer Reduzierung des Gasdruckes vom Leitungsdruck bis hin zum für den Abnehmer notwendigen Druck verwendet werden. In den hier aufgeführten Beispielen der optimalen Ausführung der Erfindung wird als Expansionsmaschine eine Entspannungsturbine genutzt. Allerdings, kann anstatt einer Entspannungsturbine eine Expansionsmaschine von jedem anderen Typ benutzt werden. Als Beispiel seien hier eine Kolbenexpansionsmaschine oder eine Rotorexpansionsmaschine genannt, welche unter anderem aus Überdruck- und Unterdruckteilen oder aus Überdruck-, Mitteldruck- und Unterdruckteilen bestehen können.

Anstatt und/oder gleichzeitig mit einem elektrischen Energieerzeuger können Turbinen, Pumpen, Luftbläser, Blockwinden sowie auch andere Konvertoren mechanischer Energie genutzt werden.

Die in den Beispielen der optimalen Erfindungsausführung beschriebenen Energienutzungsanlagen können in unmittelbarer Nähe von Erdgasbohrlöchern positioniert werden, falls der Erdgasdruck am Bohrlochausgang den Druck übersteigt, der für die Erdgasleitung benötigt wird. Dabei kann die Kälte für die Verflüssigung des Gases genutzt werden, der aus Bohrlöchern gefördert wird. Die Nutzarbeit, welche vom Gas während seiner Entspannung erfüllt wird, kann unter anderem für die Gasverflüssigung und Elektrizitätsversorgung einer einzeln stehenden Erdgasbohrung genutzt werden. Die hier geschilderten Energienutzungsanlagen sind an Stellen der Verbindung einer Erdgasleitung mit Erdgaszuführungsanlagen, welche Erdgas an große Abnehmer (Kraftwerke, Erdgasnetze in Siedlungen) liefern, sehr effektiv.

## Patentansprüche

1. Verfahren zur Ausnutzung von Erdgasentspannungsenergie bei der Gasdruckreduzierung vom überdruck bis hin zum notwendigen Druck mittels Umwandlung der Erdgasentspannungsenergie in mechanische Energie unter Nutzung des bei der Gasdruckreduzierung abgekühlten Gases als Kältemittel zur Erzeugung von Kälte, **dadurch gekennzeichnet, daß** die Reduzierung des Erdgasdrucks im Laufe von zwei oder mehr aufeinanderfolgenden Phasen durchgeführt wird, wobei gleichzeitig im Laufe jeder Phase die Erdgasentspannungsenergie in mechanische Energie umgewandelt wird und dabei mindestens ein Teil des Erdgases nach Abschluss der ersten und/oder entsprechenden folgenden Phase der Erdgasdruckreduzierung, oder auch das gesamte Gas, das als Kältemittel genutzt wurde, für die nächste Phase der Umwandlung von Erdgasentspannungsenergie in mechanische Energie ausgenutzt wird.

2. Energienutzungsanlage, bestehend aus einer Expansionsmaschine, zum Beispiel einer Entspannungsturbine, deren Ausgang mit einem Bohrloch oder einer Erdgasüberdruckleitung (3) verbunden ist, einem mit der Expansionsmaschine kinematisch verbundenem Konverter mechanischer Energie (4), zum Beispiel einem elektrischen Energieerzeuger, und außerdem aus mindestens einem Wärmetauscher-Kühlgerät (8), dessen Eingangsanschlussrohr von Seiten des Kältemittels mit dem Ausgang der Expansionsmaschine, zum Beispiel dem Ausgang einer Entspannungsturbine verbunden ist, wobei dessen Ausgangsanschlussrohr mit einer Gasunterdruckleitung oder mit dem Gasabnehmer (9) verbunden ist,
**dadurch gekennzeichnet, daß** die Expansionsmaschine, zum Beispiel eine Entspannungsturbine, aus zwei oder mehr Teilen (1,2) besteht, die hintereinander entsprechend der Erdgasdruckreduzierung angeordnet sind, wobei die Anzahl der Wärmetauscher-Kühlgeräte (6,8) nicht geringer als die Anzahl von Teilen der Expansionsmaschine ist, und das Eingangsanschlussrohr von der Seite des Kältemittels des entsprechenden Wärmetauscher-Kühlgerätes mit dem Ausgang des entsprechenden Teils der Expansionsmaschine (1,2), zum Beispiel einer Entspannungsturbine, verbunden ist.

3. Anlage nach Anspruch 2, **dadurch gekennzeichnet, daß** der Ausgang des vorhergehenden Teils (10,11) der Expansionsmaschine gleichzeitig sowohl mit dem Eingang des nächsten (11,12) Teils der Expansionsmaschine als auch mit dem Eingangsanschlussrohr des entsprechenden Wärmetauscher-Kühlgerätes (16, 18) von der Seite des Kältemittels verbunden ist, wobei das Ausgangsanschlussrohr von der Seite des Kältemittels eines oder mehrerer Wärmetauscher-Kühlgeräte (16, 18) mit einer Erdgasunterdruckleitung oder mit einem Erdgasabnehmer (17, 19) verbunden ist.

4. Anlage nach Anspruch 2, **dadurch gekennzeichnet, daß** der Ausgang des vorhergehenden Teils (22, 27) der Expansionsmaschine nur mit dem Eingangsanschlussrohr von Seiten des Kältemittels eines Wärmetauscher-Kühlgerätes (26, 30) verbunden ist, und das Ausgangsanschlussrohr von Seiten des Kältemittels eines oder mehrerer Wärmetauscher-Kühlgeräte (26, 30) mit dem Arbeitsmediumeingang des folgenden Teils (27, 31) einer Expansionsmaschine, zum Beispiel einer Entspannungsturbine, verbunden ist.
